# EUROPEAN PATENT APPLICATION

(11) **EP 1 065 581 A1**
(43) Date of publication of application: **03.01.2001**
(21) Application number: 99305272.9
(22) Date of filing: 02.07.1999
(51) Int. Cl.: G06F 1/00

(54) **Password protection**

(71) Applicant: BRITISH TELECOMMUNICATIONS public limited company, London EC1A 7AJ (GB)
(72) Inventor: The designation of the inventor has not yet been filed
(74) Representative: Semos, Robert Ernest Vickers

(57) **Abstract**

In password protection access, a nominated telephone number is used as the user identity associated with the protected information. If the user needs to change his password, he makes a call from the nominated telephone to a change password service, which automatically retrieves the calling line identity from the signalling information of the incoming call, prompts for a new password, receives the new password from the user, and records the new password in place of the previous password. There is no involvement of system administration personnel, and no consequent delay while a manual reset of the user's password is effected.

## Description

This invention relates to password protection and particularly, but not exclusively, to a method of changing a password by direct user input from a telephone.

In accordance with one aspect of the present invention, there is provided a method of managing password change for password protected access from a terminal of a communications network, comprising an initial step of storing a user identity constituted by a network terminal identity provided by the user and an associated password, and further comprising for enabling the user to change the associated password the steps of making a call to a password change service from the network terminal corresponding to said network terminal identity, retrieving by the password change service from signalling information of the call received thereat the identity of the network terminal from which that call was made, receiving a new password entered at that network terminal, and changing the previously recorded associated password to the received new password.

An advantage of a method of the present invention is the avoidance, and consequent delay, of password resetting procedures performed by system administration personnel.

In accordance with another aspect of the present invention, there is provided a password protected access system comprising means for receiving a call from a network terminal and for retrieving from signalling information of the call the identity of the network terminal from which that call was made, means for receiving from that network terminal information representative of a password, and means for updating a current password stored in association with that network terminal identity by replacing it with said information representative of a password.

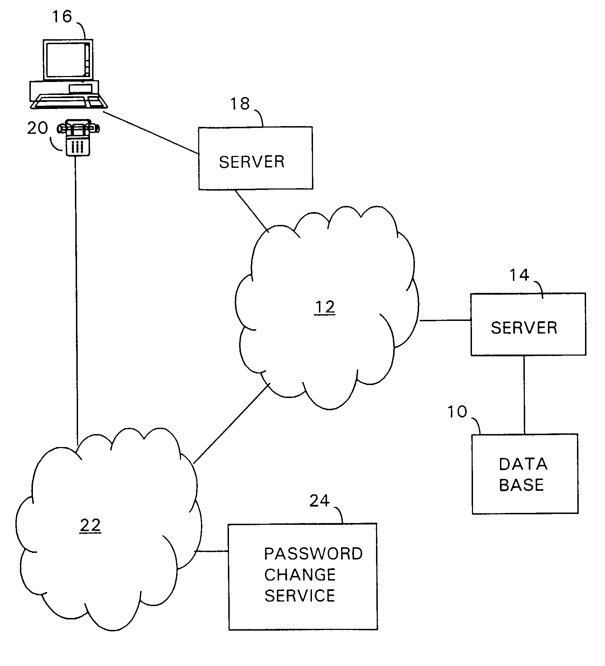

Specific embodiments of the present invention will now be described by way of example with reference to the drawing in which the Figure shows component parts of a password change service of the present invention.

By way of background to the present invention, it is known for password protected access to, for example, a remote database holding a user's personal information, to be performed by user providing a user identity, also called a username or a userlD, to identify the particular stored information which the user is requesting access to, and a password. The user identity is commonly a set of letters, often the initials of the user's names, e.g. dje or rgb. The provided password is compared with a password previously provided by the user and stored in association with the user identity, and, if there is a match, the user is granted access.

In this known arrangement, if the user forgets his password, he has to contact the system administrator responsible for the database, provide sufficient proof of his identity, and request a reset of his password. The system administrator has to effect a change of the recorded password to a nominal password, for example "password", and notify the user of that nominal password. The user can thereafter access his information using that nominal password, but for security reasons usually performs a change password procedure to change that nominal password to one which is more secure. In this change password procedure, the user is asked to enter the existing password, then his newly chosen password, and, for confirmation, to enter the new password again.

In the present invention, the user identity is not in the form of the user's initials, but is a nominated network terminal identity, which in this embodiment is a telephone number, and this will usually be the number of the user's home or work telephone. Herein the terms nominated telephone number and nominated telephone are used synonymously and interchangeably.

For normal access, the user calls the password protection system from any telephone, and when prompted for a user identity he enters the nominated telephone number via the keypad, or speaks it if there is an interactive voice response unit at the password protection system. The user will then be prompted in the usual manner for entry of his password.

If the user has forgotten his password, he makes a call from the telephone corresponding to the nominated number, i.e. the nominated telephone, to a password change service of the password protection system. On receipt at the password protection system of the incoming call from the user, the signalling information is examined and the content of the calling line identity field (CLI) is retrieved, and the user is prompted to enter a new password. This new password is then stored in place of the previously stored password in association with the user identity in the form of the retrieved CLI, i.e. the nominated telephone number.

This password change procedure avoids the inefficient use of system administration personnel, the delay to the user when such system administration personnel perform a manual change, and the risk that the user fails to change from the nominal password, which is inherently insecure, to a more secure password.

In a specific embodiment shown in the Figure, the password protected information is a electronic personal telephone or email address book remotely stored on a database 10, accessed via the Internet 12 and a WWW server 14.

The user activates a computer 16 at any suitable site, and, via a local server 18, launches a browser in known manner to access the server 14. He receives from the server 14 an access page having text boxes for the entry of a user identity and a password. Using the keyboard, the user enters the nominated telephone number for the user identity, and the current password. The server 14 performs a comparison of the entered password with the stored password associated with that user identity, and upon a match permits the user access to his address book.

If the user has forgotten his password, or if someone has managed to obtain access to the user's nominated telephone, say his work telephone, and change the password, then the user makes a call from his work telephone 20, via a public switched telephone network (PSTN) 22, to a predetermined destination terminal number at a CTI system 24 operating a change password service.

As shown in the Figure, the change password service is operated by a CTI system which is at a geographically separate location from the server 14. In variants, the CTI system 24 operating a change password service can be local to the server 14, or that function can even be made integral with the server 14.

In the present embodiment, the CTI system 24 will make a call via the PSTN 22 to the server 14 and forward the user's identity (CLI) and new password. Thus in this specific embodiment, the server 14 together with the CTI system 24 constitute means for receiving a call from a network terminal and for retrieving from signalling information of the call the identity of the network terminal from which that call was made, means for receiving from that network terminal information representative of a password, and means for updating a current password stored in association with that network terminal identity by replacing it with said information representative of a password.

The change password service is also responsible for establishing a new user area in the database. A new user makes a call to the change password service, and upon prompting enters a telephone number followed by a password, and the change password service allocates a new user area associated with that new user's identity. The establishing of a new user area can alternatively be performed by system administration personnel upon receipt of the required information from a new user via the postal service. Once a new user area has been established, the user then changes his password using the method of the present invention by making a call to the change password service from the nominated telephone.

Whereas it is most convenient for the nominated telephone number to be the telephone where the user is most likely to be located when he needs to call the change password service, it need not be so. As an example of a different procedure, a user may nominate the telephone number of a trusted person, e.g. his father, living in a completely different area to where he works, possibly even a different country. The present invention will still work, provided that the calling line identity is delivered. The user now calls his trusted person, gives him a new password and asks him to call the change password service and enter the new password when prompted.

## Claims

1. A method of managing password change for password protected access from a terminal of a communications network, comprising an initial step of storing a user identity constituted by a network terminal identity provided by the user and an associated password, and further comprising for enabling the user to change the associated password the steps of making a call to a password change service from the network terminal corresponding to said network terminal identity, retrieving by the password change service from signalling information of the call received thereat the identity of the network terminal from which that call was made, receiving a new password entered at that network terminal, and changing the previously recorded associated password to the received new password.

2. A password protected access system comprising means for receiving a call from a network terminal and for retrieving from signalling information of the call the identity of the network terminal from which that call was made, means for receiving from that network terminal information representative of a password, and means for updating a current password stored in association with that network terminal identity by replacing it with said information representative of a password.

3. A method of managing password change for password protected access, the method being substantially as hereinbefore described with reference to the drawing.

4. A password protected access system substantially as hereinbefore described with reference to the drawing.
